# EUROPEAN PATENT APPLICATION

(11) **EP 4 307 445 A1**
(43) Date of publication of application: **17.01.2024**
(21) Application number: 22924574.1
(22) Date of filing: 16.05.2022
(51) Int. Cl.: H01M 50/148, H01M 50/14, H01M 50/30

(54) **END CAP, BATTERY CELL, BATTERY AND POWER CONSUMING DEVICE**

(71) Applicant: Contemporary Amperex Technology Co., Limited, Ningde, Fujian 352100 (CN)
(72) Inventor: ZHOU, Wenlin, Ningde, Fujian 352100 (CN); CHEN, Shengwang, Ningde, Fujian 352100 (CN); LI, Quankun, Ningde, Fujian 352100 (CN); WANG, Peng, Ningde, Fujian 352100 (CN)
(74) Representative: Rowlands, Stuart Michael
(86) International application number: PCT/CN2022/093135
(87) International publication number: WO 2023/220885

(57) **Abstract**

The present application provides an end cap, a battery cell, a battery and a power consuming device, and relates to the field of batteries. The end cap includes a cap body and a reinforcing portion. The cap body is provided with a pressure relief region arranged on a side of the cap body in a protruding manner in a thickness direction, the reinforcing portion being arranged around the pressure relief region. The reinforcing portion is arranged around the outer side of the pressure relief region of the end cap, which increases the strength of the pressure relief region and the impact resistance of the pressure relief region. In this way, when the end cap is subjected to an external impact, the reinforcing portion may absorb energy of the external impact, reduce the magnitude of an impact force transmitted to the pressure relief region, and prevent the pressure relief region from being damaged due to the external impact to a certain extent, thereby ensuring that the pressure relief region can implement a normal pressure relief function, that is, preventing the pressure relief region from being opened when an internal pressure of a battery cell does not reach an initiation pressure to ensure the normal operation of the battery cell.

## Description

### Technical Field

The present application relates to the field of batteries, and in particular, to an end cap, a battery cell, a battery and a power consuming device.

### Background

Batteries are widely used in the field of new energy, such as electric vehicles and new-energy vehicles. New-energy vehicles and electric vehicles have become a new trend in development of the automotive industry. A pressure relief structure for releasing an internal pressure of a battery cell when the internal pressure reaches an initiation pressure is arranged on an end cap of the battery cell. However, in the case of an inverted cell, the pressure relief structure is often opened in advance, which leads to the failure to implement a normal pressure relief function.

### Summary

An objective of embodiments of the present application is to provide an end cap, a battery cell, a battery and a power consuming device, with a view to solving the problem that a pressure relief structure is often opened in advance in the prior art, leading to the failure to implement a normal pressure relief function.

In a first aspect, an embodiment of the present application provides an end cap, the end cap including a cap body and a reinforcing portion, wherein the cap body is provided with a pressure relief region; and the reinforcing portion is arranged on a side of the cap body in a protruding manner in a thickness direction, and the reinforcing portion is arranged around the pressure relief region.

In the above technical solution, the reinforcing portion is arranged around the outer side of the pressure relief region of the end cap, which increases the strength of the pressure relief region and the impact resistance of the pressure relief region. In this way, when the end cap is subjected to an external impact, the reinforcing portion may absorb energy of the external impact, reduce the magnitude of an impact force transmitted to the pressure relief region, and prevent the pressure relief region from being damaged due to the external impact to a certain extent, thereby ensuring that the pressure relief region can implement a normal pressure relief function, that is, preventing the pressure relief region from being opened when an internal pressure of a battery cell does not reach an initiation pressure to ensure the normal operation of the battery cell.

As an alternative technical solution of the embodiment of the present application, the reinforcing portion includes two first connecting sections and two second connecting sections, and one of the first connecting sections, one of the second connecting sections, the other first connecting section and the other second connecting section are sequentially connected end to end in a circumferential direction of the pressure relief region to form a closed structure; and the two first connecting sections are arranged opposite each other in a first direction, and the two second connecting sections are arranged opposite each other in a second direction, the first direction being perpendicular to the second direction, wherein the dimension of each of the first connecting sections in the first direction is greater than the dimension of each of the second connecting sections in the second direction.

In the above technical solution, the two first connecting sections and the two second connecting sections are respectively located in four different orientations, and the two first connecting sections and the two second connecting sections are connected to form a closed structure, which has a high strength and can effectively increase the impact resistance of the pressure relief region. In addition, since the dimension of the first connecting section in the first direction is greater than the dimension of the second connecting section in the second direction, the dimension of the second connecting section in the first direction may be less than the dimension of the first connecting section in the second direction, such that the reinforcement capacity of the first connecting section is equivalent to that of the second connecting section, and the space occupied by the reinforcing portion is reduced, thereby reducing waste of materials.

As an alternative technical solution of the embodiment of the present application, the dimension of the first connecting section in the first direction is 5%-35% of the dimension of the first connecting section in the second direction.

In the above technical solution, when the dimension of the first connecting section in the first direction is less than 5% of the dimension of the first connecting section in the second direction, the reinforcement of the first connecting section is insufficient to effectively absorb the energy of an external impact when the end cap is subjected to the external impact. If the dimension of the first connecting section in the first direction is greater than 35% of the dimension of the first connecting section in the second direction, the volume occupied by the first connecting section is relatively large, in the case of sufficient reinforcement, continuing to increase the dimension of the first connecting section in the first direction also causes waste of materials.

As an alternative technical solution of the embodiment of the present application, the dimension of the second connecting section in the second direction is 5%-30% of the dimension of the second connecting section in the first direction.

In the above technical solution, If the dimension of the second connecting section in the second direction is less than 5% of the dimension of the second connecting section in the first direction, the reinforcement of the second connecting section is insufficient to effectively absorb the energy of an external impact when the end cap is subjected to the external impact. If the dimension of the second connecting section in the second direction is greater than 30% of the dimension of the second connecting section in the first direction, the volume occupied by the second connecting section is relatively large, and in the case of sufficient reinforcement, continuing to increase the dimension of the second connecting section in the second direction also causes waste of materials.

As an alternative technical solution of the embodiment of the present application, the reinforcing portion includes at least one arc section, and one of the first connecting sections and one of the second connecting sections are connected to each other by means of one of the at least one arc section.

In the above technical solution, the arrangement of the arc section to connect the first connecting section and the second connecting section may reduce the stress concentration at a corner and optimize the stress.

As an alternative technical solution of the embodiment of the present application, the cap body is provided with a recess in a position corresponding to the reinforcing portion, and in the thickness direction, the cap body has an inner surface and an outer surface opposite each other, the reinforcing portion is arranged on the inner surface in a protruding manner, and the recess is recessed from the outer surface in a direction close to the inner surface.

In the above technical solution, the recess is formed in the outer surface of the cap body, and the recess provides a thinning effect, such that the thickness of the pressure relief region is reduced. When the internal pressure of the battery cell reaches the initiation pressure, the pressure relief region is more easily opened by the internal pressure, thereby implementing pressure relief. The provision of the recess makes the pressure relief region be more easily opened by the internal pressure and also be more easily opened by the external impact. Therefore, when the end cap is subjected to an external impact, the reinforcing portion may absorb energy of the impact, and reduce the magnitude of an impact force transmitted to the pressure relief region to reduce the influence of the external impact on the pressure relief region and prevent the pressure relief region from being damaged due to the external impact to a certain extent, thereby ensuring that the normal pressure relief function can be implemented, that is, preventing the pressure relief region from being opened when the internal pressure of the battery cell does not reach the initiation pressure to ensure the normal operation of the battery cell.

As an alternative technical solution of the embodiment of the present application, a first space is defined by an inner side wall of the reinforcing portion, a second space is defined by a side wall and a bottom wall of the recess, and the first space and the second space are located on two sides of the pressure relief region in the thickness direction.

In the above technical solution, the pressure relief region is located between the first space and the second space to ensure that the pressure relief region is located within the range of the recess, and the recess provides a relatively good thinning effect.

As an alternative technical solution of the embodiments of the present application, the pressure relief region is provided with a pressure relief groove.

In the above technical solution, by providing the pressure relief groove in the pressure relief region, a thinned portion is formed on the pressure relief region, and when the internal pressure of the battery cell reaches the initiation pressure, the pressure relief region is easily opened with the pressure relief groove as the boundary to release the internal pressure.

As an alternative technical solution of the embodiment of the present application, the pressure relief groove is a closed groove extending along a closed trajectory that is connected end to end.

In the above technical solution, the pressure relief groove is configured as the closed groove extending along the closed trajectory that is connected end to end, such that after the pressure relief region is opened, the cap body can form a relatively large opening portion in a position corresponding to the pressure relief region, thereby improving the pressure relief efficiency.

As an alternative technical solution of the embodiment of the present application, the reinforcing portion and the pressure relief groove are respectively located on two sides of the pressure relief region in the thickness direction.

In the above technical solution, the reinforcing portion is arranged on the side of the pressure relief region away from the pressure relief groove, thereby facilitating machining and manufacturing.

As an alternative technical solution of the embodiment of the present application, the pressure relief groove includes a first groove section, a second groove section, a third groove section and a fourth groove section that are connected in sequence; in the first direction, the first groove section and the third groove section are arranged opposite each other, and a maximum distance between the first groove section and the third groove section is a first distance; in the second direction, the second groove section and the fourth groove section are arranged opposite each other, and a minimum distance between the second groove section and the fourth groove section is a second distance; and the second distance is greater than the first distance, and the first direction, the second direction and the thickness direction are perpendicular to each other.

In the above technical solution, weakened regions formed by the first groove section, the second groove section, the third groove section and the fourth groove section boundary in the pressure relief region are relatively large and are easily opened by the internal pressure when the interior of the battery cell reaches the initiation pressure, and the structure is simple and is easy to form and manufacture.

As an alternative technical solution of the embodiment of the present application, the first groove section and the third groove section are linear grooves; and/or the second groove section and the fourth groove section are arc grooves.

In the above technical solution, the second groove section and the fourth groove section are arc grooves, the cap body has a weakened part formed in each of the middle of the second groove section and the middle of the fourth groove section, and the weakened parts are the parts of the pressure relief region that are opened earliest, so that the pressure relief region can be opened in time when the interior of the battery cell reaches the initiation pressure. Both the first groove section and the third groove section are linear grooves extending in the width direction of the cap body, so that the first groove section and the third groove section are arranged in parallel. After the cap body is ruptured along the second groove section and the fourth groove section, the cap body can be opened more easily along the first groove section and the third groove section, thereby increasing the opening rate of the pressure relief region, and implementing rapid pressure relief.

As an alternative technical solution of the embodiment of the present application, the cap body partially protrudes in the thickness direction to form a bump, and the reinforcing portion is arranged on a side of the bump in a protruding manner in the thickness direction.

In the above technical solution, the cap body partially protrudes in the thickness direction of the cap body to form a bump, and a recessed space is correspondingly formed in a side of the cap body opposite the bump in the thickness direction of the cap body, so that on one hand, components inside the battery cell can be accommodated, thereby facilitating an increase in the energy density of the battery cell, and on the other hand, the bending strength of the end cap and the impact resistance of the end cap can be increased.

In a second aspect, an embodiment of the present application further provides a battery cell, the battery cell including an electrode assembly, a housing and an end cap described above, wherein the housing has an accommodation space with one end open, the accommodation space being used for accommodating the electrode assembly; and the end cap is connected to the housing and closes the opening.

In a third aspect, an embodiment of the present application further provides a battery, the battery including a case and a battery cell as described above, wherein the battery cell is accommodated inside the case.

As an alternative technical solution of the embodiment of the present application, the end cap is arranged on a side of the battery cell close to a bottom wall of the case.

In the above technical solution, the end cap is arranged on the side of the battery cell close to the bottom wall of the case, that is, the battery cell is inverted inside the case.

In a fourth aspect, an embodiment of the present application further provides a power consuming device, the power consuming device including a battery as described above, wherein the battery is configured to provide electric energy.

### Brief Description of the Drawings

In order to illustrate the technical solutions of the embodiments of the present application more clearly, the accompanying drawings required in the description of the embodiments of the present application will be described briefly below. Obviously, the accompanying drawings described below are merely some embodiments of the present application, and for those of ordinary skill in the art, other accompanying drawings can also be obtained from these accompanying drawings without any creative efforts.
FIG. 1 is a schematic structural diagram of a vehicle according to some embodiments of the present application;
FIG. 2 is an exploded view of a battery according to some embodiments of the present application;
FIG. 3 is a schematic structural diagram of a battery cell according to some embodiments of the present application;
FIG. 4 is a schematic structural diagram of an end cap according to some embodiments of the present application;
FIG. 5 is a schematic bottom view of an end cap according to some embodiments of the present application;
FIG. 6 is a schematic top view of an end cap according to some embodiments of the present application;
FIG. 7 is a sectional view taken along line C-C of FIG. 6;
FIG. 8 is an enlarged view of part E of FIG. 7;
FIG. 9 is an enlarged view of part F of FIG. 6;
FIG. 10 is a schematic structural diagram of an end cap according to some other embodiments of the present application;
FIG. 11 is a schematic top view of an end cap according to some other embodiments of the present application; and
FIG. 12 is a sectional view taken along line G-G of FIG. 11.

List of reference signs: 10 - Case; 11 - First portion; 12 - Second portion; 20 - Battery cell; 21 - End cap; 211 - Cap body; 2111 - Pressure relief region; 2112 - Outer surface; 2113 - Inner surface; 2114 - Bump; 212 - Reinforcing portion; 2121 - First connecting section; 2122 - Second connecting section; 2123 - Arc section; 2124 - First space; 213 - Pressure relief groove; 2131 - First groove section; 2132 - Second groove section; 2133 - Third groove section; 2134 - Fourth groove section; 214 - recess; 22 - Electrode assembly; 23 - Housing; 100 - Battery; 200 - Controller; 300 - Motor; 1000 - Vehicle.

### Detailed Description of Embodiments

In order to make the objectives, technical solutions and advantages of the embodiments of the present application clearer, the technical solutions in the embodiments of the present application will be described clearly below with reference to the accompanying drawings in the embodiments of the present application. Obviously, the embodiments described are some of, rather than all of, the embodiments of the present application. All the other embodiments obtained by those of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "having" and any variations thereof in the description and the claims of the present application as well as the brief description of the accompanying drawings described above are intended to cover nonexclusive inclusion. The terms "first", "second", etc. in the description and the claims of the present application as well as the foregoing accompanying drawings are used to distinguish between different objects, rather than describing a specific order or a primary-secondary relationship.

In the present application, "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skills in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

"A plurality of" appearing in the present application means two or more (including two).

In the present application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, etc., which is not limited in the embodiments of the present application. The battery cell may be in the shape of a cylinder, a flat body, a cuboid, etc., which will also not be limited in the embodiments of the present application. The battery cells are generally classified into three types depending on the way of package: cylindrical battery cells, prismatic battery cells and pouch battery cells, which also will not be limited in the embodiments of the present application.

A battery mentioned in the embodiments of the present application refers to a single physical module including one or more battery cells to provide a high voltage and capacity. For example, the battery mentioned in the present application may include a battery module, a battery pack, etc. The battery generally includes a case for packaging one or more battery cells. The case can prevent liquid or other foreign matters from affecting charging or discharging of a battery cell.

The battery cell includes an electrode assembly and an electrolytic solution. The electrode assembly is composed of a positive electrode plate, a negative electrode plate and a separator. The operation of the battery cell mainly relies on the movement of metal ions between the positive electrode plate and the negative electrode plate. The positive electrode plate includes a positive current collector and a positive active material layer. A surface of the positive current collector is coated with the positive active material layer, the positive current collector not coated with the positive active material layer protrudes from the positive current collector coated with the positive active material layer, and the positive current collector not coated with the positive active material layer serves as a positive tab. Taking a lithium-ion battery as an example, the material of the positive current collector may be aluminum, and the positive active material may be lithium cobalt oxides, lithium iron phosphate, ternary lithium or lithium manganate, etc. The negative electrode plate includes a negative current collector and a negative active material layer. A surface of the negative current collector is coated with the negative active material layer, the negative current collector that is not coated with the negative active material layer protrudes from the negative current collector coated with the negative active material layer, and the negative current collector that is not coated with the negative active material layer is used as a negative tab. The negative current collector may be made of copper, and the negative active material may be carbon, silicon, etc. In order to ensure that no fusing occurs when a large current passes, a plurality of positive tabs are provided and are stacked together, and a plurality of negative tabs are provided and are stacked together. The separator may be made of PP (polypropylene), PE (polyethylene), etc. In addition, the electrode assembly may be of a wound structure or a laminated structure, which will not be limited in the embodiments of the present application.

Design factors on many aspects need to be simultaneously considered for the development of the battery technology, such as energy density, cycling life, discharge capacity, charge-discharge rate, and other performance parameters. In addition, the safety of the battery needs to be taken into account.

For a battery cell, in order to ensure the safety of the battery cell, a pressure relief structure may be provided on an end cap of the battery cell. When an internal pressure of the battery cell reaches an initiation pressure, the pressure relief structure is opened to release the internal pressure of the battery cell, so as to reduce the risk of explosion and fire of the battery cell.

The inventors have noted that in the case of an inverted cell, the pressure relief structure is often opened in advance, which leads to the failure to implement a normal pressure relief function.

The inventors have discovered by further studies that in the case of an inverted cell, an end cap is more vulnerable to an external impact, and an external impact force is easily transmitted to the part where the pressure relief structure is located, so that the pressure relief structure is opened in advance, leading to the failure to implement the normal pressure relief function.

In view of this, an embodiment of the present application provides an end cap, including a cap body and a reinforcing portion, wherein the cap body is provided with a pressure relief region, the reinforcing portion is arranged on a side of the cap body in a protruding manner in a thickness direction, and the reinforcing portion is arranged around the pressure relief region.

The reinforcing portion is arranged around the outer side of the pressure relief region of the end cap, which increases the strength of the pressure relief region and the impact resistance of the pressure relief region. In this way, when the end cap is subjected to an external impact, the reinforcing portion may absorb energy of the external impact, reduce the magnitude of an impact force transmitted to the pressure relief region, and prevent the pressure relief region from being damaged due to the external impact to a certain extent, thereby ensuring that the pressure relief region can implement a normal pressure relief function, that is, preventing the pressure relief region from being opened when an internal pressure of a battery cell does not reach an initiation pressure to ensure the normal operation of the battery cell.

The technical solution described in the embodiments of the present application is applicable to a battery and a power consuming device using the battery.

The power consuming device may be a vehicle, a mobile phone, a portable device, a notebook computer, a ship, a spacecraft, an electric toy, an electric tool, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling electric tool, and a railway electric tool, such as an electric drill, an electric grinder, an electric wrench, an electric screwdriver, an electric hammer, an electric impact drill, a concrete vibrator, and an electric planer. The power consuming devices mentioned above are not specially limited in the embodiments of the present application.

For ease of description, an example in which the power consuming device refers to a vehicle 1000 is used for description in the following embodiments.

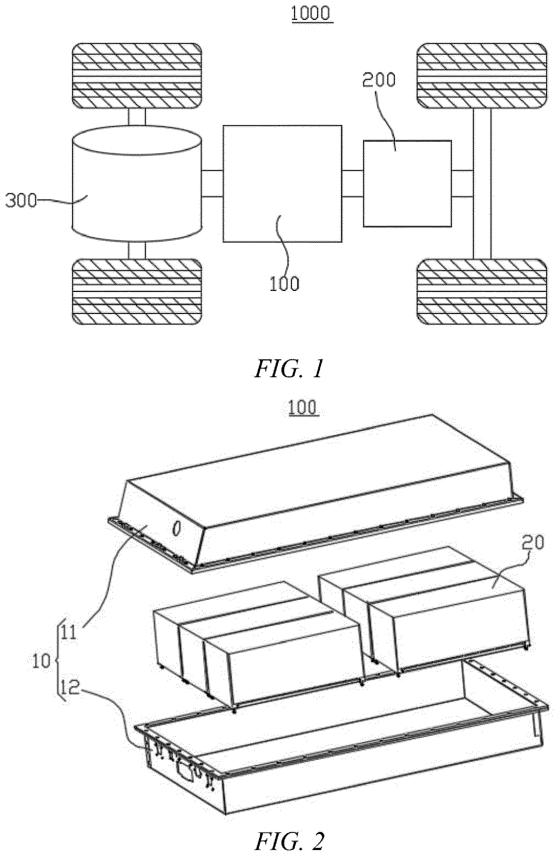

Referring to FIG. 1, FIG. 1 is a schematic structural diagram of a vehicle 1000 provided in some embodiments of the present application. The vehicle 1000 may be a fuel vehicle, a gas vehicle, or a new energy vehicle. The new energy vehicle may be a battery electric vehicle, a hybrid electric vehicle, an extended-range vehicle, etc. A battery 100 is provided inside the vehicle 1000, and the battery 100 may be provided at the bottom, the front or the back of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 can not only serve as a power supply for operating the vehicle 1000, but also serve as a power supply for driving the vehicle 1000, instead of or partially instead of fuel or natural gas, to provide driving power for the vehicle 1000.

Referring to FIG. 2, FIG. 2 is an exploded view of the battery 100 provided in some embodiments of the present application. The battery 100 includes a case 10 and battery cells 20. The battery cells 20 are accommodated in the case 10. The case 10 is configured to provide an accommodation space for the battery cells 20, and the case 10 may have various structures. In some embodiments, the case 10 may include a first portion 11 and a second portion 12. The first portion 11 and the second portion 12 cover each other, and the first portion 11 and the second portion 12 jointly define the accommodation space for accommodating the battery cells 20. The second portion 12 may be of a hollow structure with one end open, the first portion 11 may be of a plate-like structure, and the first portion 11 covers an open side of the second portion 12 such that the first portion 11 and the second portion 12 jointly define the accommodation space; and the first portion 11 and the second portion 12 may also be of a hollow structure with one side open, and an open side of the first portion 11 covers the open side of the second portion 12. Of course, the case 10 formed by the first portion 11 and the second portion 12 may be in various forms, such as a cylinder, a cuboid, etc.

In the battery 100, a plurality of battery cells 20 may be provided. The plurality of battery cells 20 may be connected in series, in parallel, or in series and parallel. The parallel-series connection means that the plurality of battery cells 20 are connected both in series and in parallel. The plurality of battery cells 20 may be directly connected together in series, or in parallel, or in series-parallel, and then a unit composed of the plurality of battery cells 20 is accommodated inside the case 10. Of course, the battery 100 may also be a unit accommodated in the case 10 that is formed by firstly connecting the plurality of battery cells 20 in series or in parallel or in series and parallel to battery modules, and then connecting the plurality of battery modules in series or in parallel or in series and parallel. The battery 100 may further include other structures. For example, the battery 100 may further include a busbar component for achieving electrical connections between the plurality of battery cells 20.

Each battery cell 20 may be a secondary battery cell or a primary battery cell, and may also be a lithium-sulfur battery cell, a sodium-ion battery cell, or a magnesium-ion battery cell, but is not limited thereto. The battery cell 20 may be in the form of a cylinder, a flat body, a cuboid, etc.

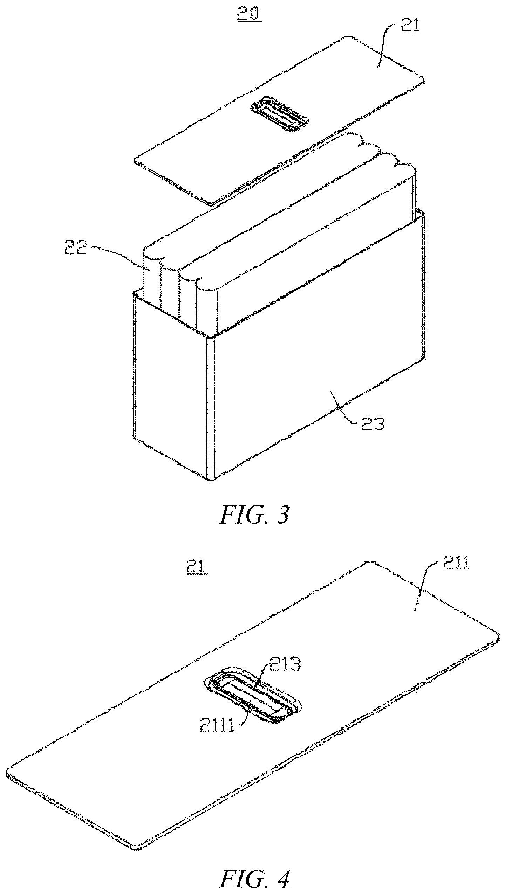

Referring to FIG. 3, FIG. 3 is a schematic exploded structural diagram of the battery cell 20 provided in some embodiments of the present application. The battery cell 20 refers to the smallest unit of the battery 100. As shown in FIG. 3, the battery cell 20 includes an end cap 21, an electrode assembly 22, a housing 23, and other functional components.

The end cap 21 refers to a component that covers an opening of the housing 23 to isolate internal environment of the battery cell 20 from external environment. Without limitation, the end cap 21 may be shaped to adapt to the shape of the housing 23 so as to fit with the housing 23. Optionally, the end cap 21 may be made of a material (e.g., an aluminum alloy) with certain hardness and strength, and thus the end cap 21 would not easily deform when subjected to squeezing or collision, so that the battery cell 20 can have a higher structural strength, and the safety performance can also be improved. Functional components, such as electrode terminals (not shown), may be provided on the end cap 21. The electrode terminals may be used for electrical connection to the electrode assembly 22 for outputting or inputting electric energy of the battery cell 20. The end cap 21 may also be made of various materials, such as copper, iron, aluminum, stainless steel, an aluminum alloy and plastic, which is not specially limited in the embodiments of the present application. In some embodiments, an insulating member may be further provided on an inner side of the end cap 21. The insulating member may be used to isolate electrical connection components inside the housing 23 from the end cap 21 in order to reduce the risk of short circuiting. Exemplarily, the insulating member may be made of plastic, rubber, etc.

The housing 23 is an assembly that is configured to fit with the end cap 21 so as to create the internal environment of the battery cell 20, wherein the created internal environment may be used for accommodating the electrode assembly 22, an electrolyte and other components. The housing 23 and the end cap 21 may be independent components, and the housing 23 may be provided with an opening, at which the end cap 21 covers the opening to create the internal environment of the battery cell 20. Without limitation, the end cap 21 and the housing 23 may also be integrated. Specifically, the end cap 21 and the housing 23 may firstly form a common connecting surface before other components are placed into the housing, and then the end cap 21 covers the housing 23 when the interior of the housing 23 needs to be packaged. The housing 23 may have various shapes and various sizes, for example, in the form of a cuboid, a cylinder, a hexagonal prism, etc. Specifically, the shape of the housing 23 may be determined depending on the specific shape and size of the electrode assembly 22. The housing 23 may be made of various materials, such as copper, iron, aluminum, stainless steel, an aluminum alloy, plastic, etc., which is not particularly limited in the embodiments of the present application.

The electrode assembly 22 is a component where an electrochemical reaction occurs in the battery cell 20. The housing 23 may include one or more electrode assemblies 22 therein. The electrode assembly 22 is mainly formed by winding or stacking a positive electrode plate and a negative electrode plate, and a separator is generally arranged between the positive electrode plate and the negative electrode plate. The portions of the positive electrode plate and the negative electrode plate that have an active material form a main body portion of the electrode assembly 22, and the portions of the positive electrode plate and the negative electrode plate that have no active material each form a tab. A positive tab and a negative tab may be both located at one end of the main body portion or respectively at two ends of the main body portion. During the charging and discharging of the battery 100, a positive active material and a negative active material react with the electrolyte, and the tabs are connected to the electrode terminals to form a current loop.

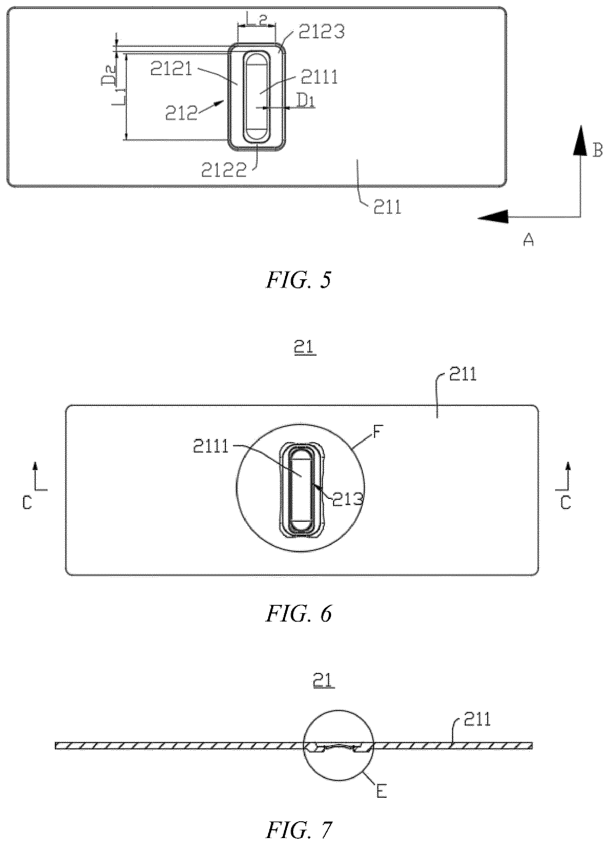

Referring to FIGS. 4 and 5, FIG. 4 is a schematic structural diagram of an end cap 21 provided in some embodiments of the present application. FIG. 5 is a schematic bottom view of an end cap 21 provided in some embodiments of the present application. Embodiments of the present application provide an end cap 21, the end cap 21 including a cap body 211 and a reinforcing portion 212. The cap body 211 is provided with a pressure relief region 2111, the reinforcing portion 212 is arranged on a side of the cap body 211 in a protruding manner in a thickness direction, and the reinforcing portion 212 is arranged around the pressure relief region 2111.

The cap body 211 is a main structure of the end cap 21, and is mainly configured to close an opening of the housing 23. The cap body 211 is shaped to adapt to the shape of the opening of the housing 23. For example, when the opening of the housing 23 is rectangular, the cap body 211 is also rectangular. When the opening of the housing 23 is circular, the cap body 211 is also circular.

The pressure relief region 2111 is a region on the cap body 211 to implement the pressure relief function. As an example, the pressure relief region 2111 may be a region on the end cap 21 in which an explosion-proof sheet is welded. As another example, the end cap 21 is provided with a pressure relief groove 213, and the pressure relief region 2111 may include a region inside the pressure relief groove 213 and a partial region outside the pressure relief groove).

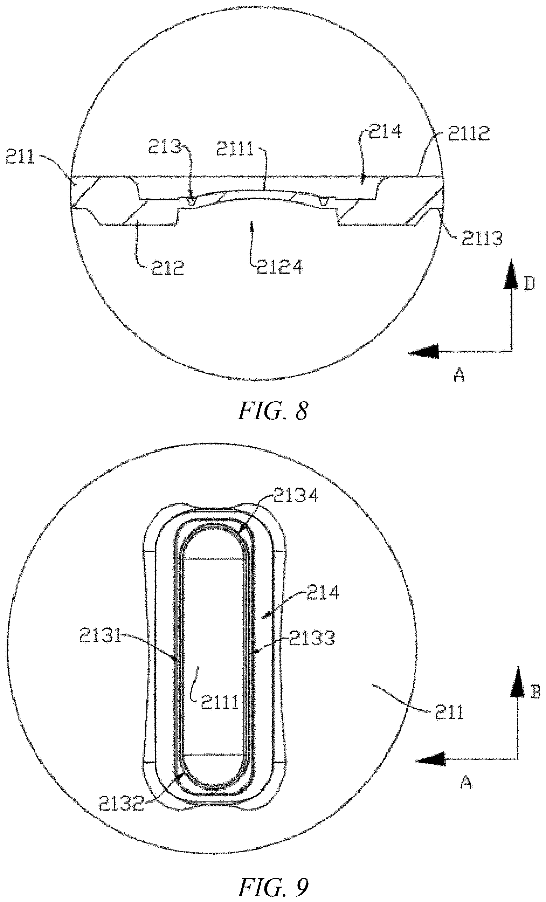

The reinforcing portion 212 is a protrusion structure protruding from a side of the cap body 211 in the thickness direction (direction D as shown in FIG. 8) and arranged around the pressure relief region 2111. The reinforcing portion 212 may be provided on a surface of the cap body 211 facing the interior of the housing 23, or may be provided on a surface of the cap body 211 that faces away from the housing 23. Taking the cap body 211 which is of a rectangular flat-plate structure as an example, the cap body 211 has an inner surface 2113 and an outer surface 2112 opposite each other in the thickness direction. The inner surface 2113 of the cap body 211 faces the interior of the housing 23, and the outer surface 2112 of the cap body 211 is arranged facing away from the housing 23. The reinforcing portion 212 may be provided on the inner surface 2113 of the cap body 211 or the outer surface 2112 of the cap body 211.

The reinforcing portion 212 may have various forms. As an example, the reinforcing portion 212 encloses a runway, and the pressure relief region 2111 is a portion enclosed by an inner ring of the runway on the cap body 211. As another example, the reinforcing portion 212 encloses a rectangle. The pressure relief region 2111 is a portion enclosed by the rectangle on the cap body 211. As yet another example, if the reinforcing portion 212 is a U-shaped protrusion extending along a U-shaped trajectory, the pressure relief region 2111 is a portion enclosed by the U-shaped protrusion.

The reinforcing portion 212 is arranged around the outer side of the pressure relief region 2111 of the end cap 21, which increases the strength of the pressure relief region 2111 and the impact resistance of the pressure relief region 2111. In this way, when the end cap 21 is subjected to an external impact, the reinforcing portion 212 may absorb energy of the external impact, reduce the magnitude of an impact force transmitted to the pressure relief region 2111, and prevent the pressure relief region 2111 from being damaged due to the external impact to a certain extent, thereby ensuring that the pressure relief region 2111 can implement a normal pressure relief function, that is, preventing the pressure relief region 2111 from being opened when an internal pressure of a battery cell 20 does not reach an initiation pressure to ensure the normal operation of the battery cell 20.

Referring to FIG. 5, in some embodiments, the reinforcing portion 212 includes two first connecting sections 2121 and two second connecting sections 2122. One of the first connecting sections 2121, one of the second connecting sections 2122, the other first connecting section 2121 and the other second connecting section 2122 are sequentially connected end to end in a circumferential direction of the pressure relief region 2111 to form a closed structure. The two first connecting sections 2121 are arranged opposite each other in a first direction, and the two second connecting sections 2122 are arranged opposite each other in a second direction, the first direction being perpendicular to the second direction. The dimension of each of the first connecting sections 2121 in the first direction is greater than the dimension of each of the second connecting sections 2122 in the second direction.

The two first connecting sections 2121 and the two second connecting sections 2122 are respectively parts of the reinforcing portion 212 in four different orientations. In this embodiment, the two first connecting sections 2121 and the two second connecting sections 2122 are linear protrusions extending along a linear trajectory. The expression "one of the first connecting sections 2121, one of the second connecting sections 2122, the other first connecting section 2121 and the other second connecting section 2122 are sequentially connected end to end to form a closed structure" includes both a tail end of one of the first connecting sections 2121 being directly connected to a head end of one of the second connecting sections 2122 and a tail end of one of first connecting sections 2121 being indirectly connected to a head end of the other second connecting section 2122 via an intermediate structure. Similarly, a tail end of one of the second connecting sections 2122 may be directly or indirectly connected to a head end of the other first connecting section 2121 via an intermediate structure.

Since both the first connecting sections 2121 and the second connecting sections 2122 are linear protrusions, the expression "the two first connecting sections 2121 are arranged opposite each other in a first direction (direction A as shown in FIG. 5), and the two second connecting sections 2122 are arranged opposite each other in a second direction (direction B as shown in FIG. 5)" may also be understood as that the two first connecting sections 2121 are arranged in parallel in the first direction, and the two second connecting sections 2122 are arranged in parallel in the second direction.

In this embodiment, referring to FIG. 5, the length (L₁ as shown in FIG. 5) of the first connecting section 2121 in the second direction is greater than the length (L₂ as shown in FIG. 5) of the second connecting section 2122 in the first direction. In this way, the side where the second connecting section 2122 is located is a short side of the reinforcing portion 212, and the side where the second connecting section 2122 is located is a long side of the reinforcing portion 212. Because two corners of the short side are close to each other, a reinforcing effect can be achieved. If the dimension (D₁ as shown in FIG. 5) of the first connecting section 2121 in the first direction is equal to the dimension (D₂ as shown in FIG. 5) of the second connecting section 2122 in the second direction, the reinforcing portion 212 has a relatively high degree of reinforcement at the short side while having a relatively low degree of reinforcement at the long side.

In this embodiment, the dimension D₁ of the first connecting section 2121 in the first direction is greater than the dimension D₂ of the second connecting section 2122 in the second direction, such that the degree of reinforcement of the reinforcing portion 212 at the short side is equivalent to that of the reinforcing portion 212 at the long side.

The two first connecting sections 2121 and the two second connecting sections 2122 are respectively located in four different orientations, and the two first connecting sections 2121 and the two second connecting sections 2122 are connected to form a closed structure, which has a high strength and can effectively increase the impact resistance of the pressure relief region 2111. In addition, since the dimension D₁ of the first connecting section 2121 in the first direction is greater than the dimension D₂ of the second connecting section 2122 in the second direction, the dimension L₂ of the second connecting section 2122 in the first direction may be less than the dimension L₁ of the first connecting section 2121 in the second direction, such that the reinforcement capacity of the first connecting section 2121 is equivalent to that of the second connecting section 2122, and the space occupied by the reinforcing portion 212 is reduced, thereby reducing waste of materials.

In some embodiments, the dimension D₁ of the first connecting section 2121 in the first direction is 5%-35% of the dimension L₁ of the first connecting section 2121 in the second direction.

In this embodiment, the first connecting section 2121 extends in the second direction, "the dimension D₁ of the first connecting section 2121 in the first direction" is the width of the first connecting section 2121, and "the dimension L₁ of the first connecting section 2121 in the second direction" is the length of the first connecting section 2121. "The dimension D₁ of the first connecting section 2121 in the first direction is 5%-35% of the dimension L₁ of the first connecting section 2121 in the second direction" may also be understood as that the width of the first connecting section 2121 is 5%-35% of the length of the first connecting section 2121.

If the dimension of the first connecting section 2121 in the first direction D₁ is less than 5% of the dimension L₁ of the first connecting section 2121 in the second direction, the reinforcement of the first connecting section 2121 is insufficient to effectively absorb the energy of an external impact when the end cap 21 is subjected to the external impact. If the dimension D₁ of the first connecting section 2121 in the first direction is greater than 35% of the dimension L₁ of the first connecting section 2121 in the second direction, the volume occupied by the first connecting section 2121 is relatively large, in the case of sufficient reinforcement, continuing to increase the dimension D₁ of the first connecting section 2121 in the first direction also causes waste of materials.

In some embodiments, the dimension D₂ of the second connecting section 2122 in the second direction is 5%-30% of the dimension L₂ of the second connecting section 2122 in the first direction.

In this embodiment, the second connecting section 2122 extends in the first direction, the dimension D₂ of the second connecting section 2122 in the second direction is the width of the second connecting section 2122, and the dimension L₂ of the second connecting section 2122 in the first direction is the length of the second connecting section 2122. The expression "the dimension D₂ of the second connecting section 2122 in the second direction is 5%-30% of the dimension L₂ of the second connecting section 2122 in the first direction" may also be understood as that the width of the second connecting section 2122 is 5%-30% of the length of the second connecting section 2122.

If the dimension D₂ of the second connecting section 2122 in the second direction is less than 5% of the dimension L₂ of the second connecting section 2122 in the first direction, the reinforcement of the second connecting section 2122 is insufficient to effectively absorb the energy of an external impact when the end cap 21 is subjected to the external impact. If the dimension D₂ of the second connecting section 2122 in the second direction is greater than 30% of the dimension L₂ of the second connecting section 2122 in the first direction, the volume occupied by the second connecting section 2122 is relatively large, and in the case of sufficient reinforcement, continuing to increase the dimension D₂ of the second connecting section 2122 in the second direction also causes waste of materials.

Referring to FIG. 5, in some embodiments, the reinforcing portion 212 comprises at least one arc section 2123, and one of the first connecting sections 2121 and one of the second connecting sections 2122 are connected to each other by means of one arc section 2123.

The arc section 2123 is a protrusion structure extending along an arc trajectory. The reinforcing portion 212 may have one arc section 2123, two arc sections 2123, three arc sections 2123 or four arc sections 2123. The first connecting section 2121 and the second connecting section 2122 are indirectly connected to each other by means of one arc section 2123 to provide an arc transition.

The arrangement of the arc section 2123 to connect the first connecting section 2121 and the second connecting section 2122 may reduce the stress concentration at a corner and optimize the stress.

Referring to FIGS. 6, 7 and 8, FIG. 6 is a schematic top view of an end cap 21 provided in some embodiments of the present application. FIG. 7 is a sectional view taken along line C-C of FIG. 6. FIG. 8 is an enlarged view of part E of FIG. 7. In some embodiments, the cap body 211 is provided with a recess 214 at a position corresponding to the reinforcing portion 212. In the thickness direction, the cap body 211 has an inner surface 2113 and an outer surface 2112 opposite each other. The reinforcing portion 212 is arranged on the inner surface 2113 in a protruding manner, and the recess 214 is recessed from the outer surface 2112 in a direction close to the inner surface 2113.

"The cap body 211 is provided with a recess 214 at a position corresponding to the reinforcing portion 212" means that a projection of the outline of the recess 214 falls within the projection range of the reinforcing portion 212 in the thickness direction.

The inner surface 2113 refers to a surface of the cap body 211 close to the housing 23, and the outer surface 2112 refers to a surface of the cap body 211 away from the housing 23.

The recess 214 refers to a groove structure that penetrates the outer surface 2112 of the cap body 211 and extends in a direction from the outer surface 2112 to the inner surface 2113. The shape of the recess 214 is not limited. For example, the recess 214 may be rectangular or circular.

The recess 214 is formed in the outer surface 2112 of the cap body 211, and the recess 214 provides a thinning effect, such that the thickness of the pressure relief region 2111 is reduced. When the internal pressure of the battery cell 20 reaches the initiation pressure, the pressure relief region 2111 is more easily opened by the internal pressure, thereby implementing pressure relief. The provision of the recess 214 makes the pressure relief region 2111 be more easily opened by the internal pressure and also be more easily opened by an external impact. Therefore, when the end cap 21 is subjected to an external impact, the reinforcing portion 212 may absorb energy of the impact, and reduce the magnitude of an impact force transmitted to the pressure relief region 2111, so as to reduce the influence of the external impact on the pressure relief region 2111, and prevent the pressure relief region 2111 from being damaged due to the external impact to a certain extent, thereby ensuring that a normal pressure relief function can be implemented.

Referring to FIG. 8, in some embodiments, a first space 2124 is defined by an inner side wall of the reinforcing portion 212, and a second space is defined by a side wall and a bottom wall of the recess 214. The first space 2124 and the second space are located on two sides of the pressure relief region 2111 in the thickness direction.

The first space 2124 is a space defined by the inner side wall of the reinforcing portion 212. In the thickness direction, the first space 2124 is located on a side of the pressure relief region 2111 close to the reinforcing portion 212.

The second space is a space defined by the side wall and the bottom wall of the recess 214, in other words, the second space is an internal space of the recess 214. In the thickness direction, the second space is located on a side of the pressure relief region 2111 away from the reinforcing portion 212. That is, the first space 2124 and the second space are located on two sides of the pressure relief region 2111 in the thickness direction.

The pressure relief region 2111 is located between the first space 2124 and the second space to ensure that the pressure relief region 2111 is located within the range of the recess 214, and the recess 214 provides a relatively good thinning effect.

Referring to FIG. 8, in some embodiments, the inner side wall of the reinforcing portion 212 is obliquely arranged, and an obtuse angle is formed between the inner side wall of the reinforcing portion 212 and the inner surface 2113. In this way, in the thickness direction, the first space 2124 gradually increases in the direction from the outer surface 2112 to the inner surface 2113, which facilitates avoiding the electrode assembly 22.

In some embodiments, an outer side wall of the reinforcing portion 212 is obliquely arranged, and an obtuse angle is formed between the outer side wall of the reinforcing portion 212 and the inner surface 2113. In this way, it can be ensured that an accommodation space enclosed by the cap body 211 and the housing 23 is less occupied by the reinforcing portion 212 while sufficient width of the reinforcing portion 212 is ensured.

Referring to FIG. 8, in some embodiments, the pressure relief region 2111 is provided with a pressure relief groove 213.

The pressure relief groove 213 may be a recess 214 recessed from the surface of the pressure relief region 2111 in the thickness direction of the cap body 211. The pressure relief groove 213 may be formed in a variety of ways, such as stamping, and milling. The pressure relief groove 213 may have various forms, which are not limited in this embodiment. For example, the pressure relief groove 213 may be the recess 214 extending along a rectangular trajectory. The pressure relief groove 213 may also be a linear groove extending along a bent trajectory. When the internal pressure of the battery cell 20 reaches the initiation pressure, the pressure relief region 2111 may be opened with the pressure relief groove 213 as a boundary, so as to release the internal pressure of the battery cell 20.

By providing the pressure relief groove 213 in the pressure relief region 2111, a thinned portion is formed on the pressure relief region 2111, and when the internal pressure of the battery cell 20 reaches the initiation pressure, the pressure relief region 2111 is easily opened with the pressure relief groove 213 as the boundary to release the internal pressure.

Referring to FIG. 9, FIG. 9 is an enlarged view of part F of FIG. 6. In some embodiments, the pressure relief groove 213 is a closed groove extending along a closed trajectory that is connected end to end.

The closed trajectory is a trajectory connected end to end, such as a rectangular trajectory and an elliptical trajectory. Taking the formation of the pressure relief groove 213 by means of milling as an example, the cap body 211 may be machined along the closed trajectory to form the pressure relief groove 213.

In this embodiment, the pressure relief groove 213 is a closed groove. After the pressure relief region 2111 is opened, the cap body 211 can form a relatively large opening portion in a position corresponding to the pressure relief region 2111, thereby improving the pressure relief efficiency.

Referring to FIGS. 8 and 9, in some embodiments, in the thickness direction, the reinforcing portion 212 and the pressure relief groove 213 are respectively located on two sides of the pressure relief region 2111 in the thickness direction.

When the reinforcing portion 212 is arranged on the inner surface 2113 of the cap body 211, the pressure relief groove 213 is arranged on the side of the pressure relief region 2111 close to the outer surface 2112 of the cap body 211. When the reinforcing portion 212 is arranged on the outer surface 2112 of the cap body 211, the pressure relief groove 213 is arranged on the side of the pressure relief region 2111 close to the inner surface 2113 of the cap body 211.

The reinforcing portion 212 is arranged on the side of the pressure relief region 2111 away from the pressure relief groove 213, thereby facilitating machining and manufacturing.

Referring to FIG. 9, in some embodiments, the pressure relief groove 213 includes a first groove section 2131, a second groove section 2132, a third groove section 2133 and a fourth groove section 2134 that are connected in sequence. In a first direction, the first groove section 2131 and the third groove section 2133 are arranged opposite each other, and a maximum distance between the first groove section 2131 and the third groove section 2133 is a first distance. In a second direction, the second groove section 2132 and the fourth groove section 2134 are arranged opposite each other, and a minimum distance between the second groove section 2132 and the fourth groove section 2134 is a second distance. The second distance is greater than the first distance, and the first direction, the second direction and the thickness direction are perpendicular to each other.

The first groove section 2131, the second groove section 2132, the third groove section 2133 and the fourth groove section 2134 are respectively groove sections of the pressure relief groove 213 in four different orientations. In this embodiment, the shapes of the first groove section 2131, the second groove section 2132, the third groove section 2133 and the fourth groove section 2134 are not specially limited. For example, the first groove section 2131, the second groove section 2132, the third groove section 2133 and the fourth groove section 2134 may be linear grooves, or may be arc grooves. If the first groove section 2131, the second groove section 2132, the third groove section 2133 and the fourth groove section 2134 are linear grooves, the first groove section 2131 and the third groove section 2133 may or may not be parallel to each other, and the second groove section 2132 and the fourth groove section 2134 may or may not be parallel to each other.

The first groove section 2131 and the third groove section 2133 are arranged in parallel, and a maximum distance between the first groove section 2131 and the third groove section 2133 is equal to a minimum distance therebetween. The second groove section 2132 and the fourth groove section 2134 are arranged in parallel, and a maximum distance between the second groove section 2132 and the fourth groove section 2134 is equal to a minimum distance therebetween.

The second groove section 2132 and the fourth groove section 2134 are short sides of the pressure relief groove 213, and the first groove section 2131 and the third groove section 2133 are long sides of the pressure relief groove 213.

In this embodiment, the pressure relief region 2111 delimited by the pressure relief groove 213 has a relatively large pressure relief area and is simple in structure and easy to form and manufacture.

Referring to FIG. 9, in some embodiments, the first groove section 2131 and the third groove section 2133 are linear grooves; and/or the second groove section 2132 and the fourth groove section 2134 are arc grooves.

The second groove section 2132 and the fourth groove section 2134 may be bent in the same direction or in opposite directions. The second groove section 2132 and the fourth groove section 2134 may be bent in directions close to each other, so that a circle center of the second groove section 2132 and a circle center of the fourth groove section 2134 are located outside the pressure relief region 2111. The second groove section 2132 and the fourth groove section 2134 may also be bent in directions away from each other, so that the circle center of the second groove section 2132 and the circle center of the fourth groove section 2134 are located inside the pressure relief region 2111.

Exemplarily, in FIG. 9, the second groove section 2132 and the fourth groove section 2134 are bent in directions away from each other, the first groove section 2131 and the third groove section 2133 are linear grooves extending in a second direction of the cap body 211, both the first groove section 2131 and the third groove section 2133 are tangent to the second groove section 2132, and both the first groove section 2131 and the third groove section 2133 are tangent to the fourth groove section 2134; in the second direction, a distance between the middle of the second groove section 2132 and the middle of the fourth groove section 2134 is a maximum distance between the second groove section 2132 and the fourth groove section 2134, and the length of the first groove section 2131 is a minimum distance between the second groove section 2132 and the fourth groove section 2134.

In this embodiment, the second groove section 2132 and the fourth groove section 2134 are arc grooves, the cap body 211 has a weakened part formed in each of the middle of the second groove section 2132 and the middle of the fourth groove section 2134, and the weakened parts are the parts of the pressure relief region 2111 that are opened earliest, so that the pressure relief region 2111 can be opened in time when the interior of the battery cell 20 reaches the initiation pressure. Both the first groove section 2131 and the third groove section 2133 are linear grooves extending in the second direction, so that the first groove section 2131 and the third groove section 2133 are arranged in parallel. After the cap body 211 is ruptured along the second groove section 2132 and the fourth groove section 2134, the cap body can be opened more easily along the first groove section 2131 and the third groove section 2133, thereby increasing the opening rate of the pressure relief region 2111, and implementing rapid pressure relief.

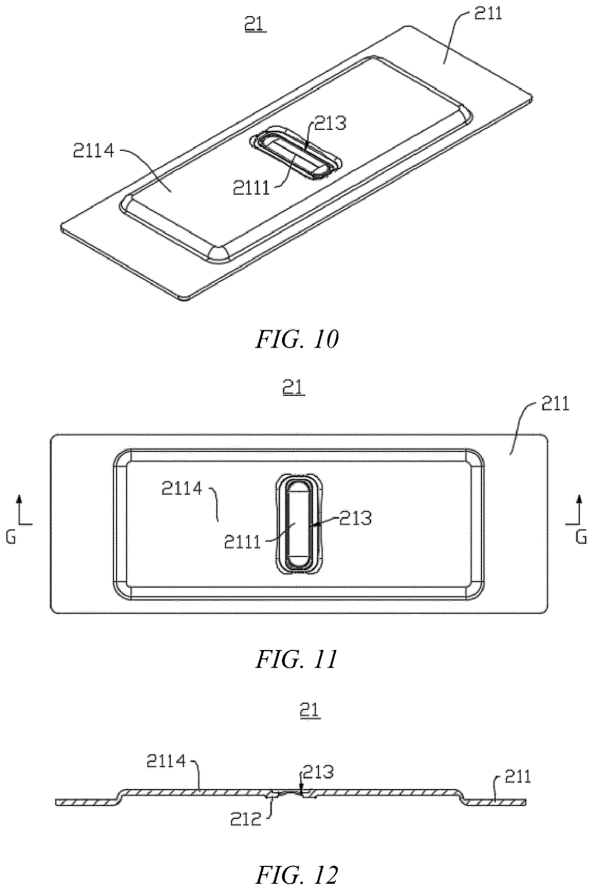

Referring to FIGS. 10, 11 and 12, FIG. 10 is a schematic structural diagram of an end cap 21 provided in some other embodiments of the present application. FIG. 11 is a schematic top view of an end cap 21 provided in some other embodiments of the present application. FIG. 12 is a sectional view taken along line G-G of FIG. 11. In some other embodiments, the cap body 211 partially protrudes in the thickness direction to form a bump 2114, and the pressure relief groove 213 is provided in the bump 2114.

The cap body 211 partially protrudes in the thickness direction of the cap body 211 to form a bump 2114, and a recessed space is correspondingly formed in a side of the cap body 211 opposite the bump 2114 in the thickness direction of the cap body, so that on one hand, components inside the battery cell 20 can be accommodated, thereby facilitating an increase in the energy density of the battery cell 20, and on the other hand, the bending strength of the end cap 21 and the impact resistance of the end cap 21 can be increased.

An embodiment of the present application further provides a battery cell 20, the battery cell 20 including an electrode assembly 22, a housing 23, and an end cap 21 as described above. The housing 23 has an accommodation space with one end open, the accommodation space being used for accommodating the electrode assembly 22. The end cap 21 is connected to the housing 23 and closes the opening.

An embodiment of the present application further provides a battery 100, the battery 100 including a case 10 and a battery cell 20 as described above, wherein the battery cell 20 is accommodated inside the case 10.

In some embodiments, the end cap 21 is arranged on a side of the battery cell 20 close to a bottom wall of the case 10.

The bottom wall of the case 10 is a wall of the case 10 opposite the open end of the case 10.

The end cap 21 is arranged on the side of the battery cell 20 close to the bottom wall of the case 10, that is, the battery cell 20 is inverted inside the case 10.

An embodiment of the present application further provides a power consuming device, the power consuming device including a battery 100 as described above, wherein the battery 100 is configured to provide electric energy.

According to some embodiments of the present application, reference is made to FIGS. 4 to 8.

Embodiments of the present application provide an end cap 21, the end cap 21 including a cap body 211 and a reinforcing portion 212. The cap body 211 is provided with a pressure relief region 2111, the reinforcing portion 212 is arranged on a side of the cap body 211 in a protruding manner in a thickness direction, and the reinforcing portion 212 is arranged around the pressure relief region 2111. The reinforcing portion 212 includes two first connecting sections 2121 and two second connecting sections 2122, and one of the first connecting sections 2121, one of the second connecting sections 2122, the other first connecting section 2121 and the other second connecting section 2122 are sequentially connected end to end in a circumferential direction of the pressure relief region 2111 to form a closed structure. The two first connecting sections 2121 are arranged opposite each other in a first direction, and the two second connecting sections 2122 are arranged opposite each other in a second direction. The first direction is perpendicular to the second direction. The dimension D₁ of each of the first connecting sections 2121 in the first direction is greater than the dimension D₂ of each of the second connecting sections 2122 in the second direction. The dimension D₁ of the first connecting section 2121 in the first direction is 5%-35% of the dimension L₁ of the first connecting section 2121 in the second direction. The dimension D₂ of the second connecting section 2122 in the second direction is 5%-30% of the dimension L₂ of the second connecting section 2122 in the first direction.

The cap body 211 is provided with a recess 214 in a position corresponding to the reinforcing portion 212. In the thickness direction, the cap body 211 has an inner surface 2113 and an outer surface 2112 opposite each other, the reinforcing portion 212 is arranged on the inner surface 2113 in a protruding manner, and the recess 214 is recessed from the outer surface 2112 in a direction close to the inner surface 2113. A first space 2124 is defined by an inner side wall of the reinforcing portion 212, a second space is defined by a side wall and a bottom wall of the recess 214, and the first space 2124 and the second space are located at two sides of the pressure relief region 2111 in the thickness direction.

The reinforcing portion 212 is arranged around the outer side of the pressure relief region 2111 of the end cap 21, which increases the strength of the pressure relief region 2111 and the impact resistance of the pressure relief region 2111. In this way, when the end cap 21 is subjected to external impact, the reinforcing portion 212 can absorb energy of the external impact, reduce the magnitude of an impact force transmitted to the pressure relief region 2111, and prevent the pressure relief region 2111 from being damaged due to the external impact to a certain extent, thereby ensuring that the pressure relief region 2111 can implement a normal pressure relief function, that is, preventing the pressure relief region 2111 from being opened when an internal pressure of a battery cell 20 does not reach an initiation pressure, so as to ensure the normal operation of the battery cell 20. The two first connecting sections 2121 and the two second connecting sections 2122 are respectively located in four different orientations, and the two first connecting sections 2121 and the two second connecting sections 2122 are connected to form a closed structure, which has a high strength and can effectively increase the impact resistance of the pressure relief region 2111. In addition, since the dimension D₁ of the first connecting section 2121 in the first direction is greater than the dimension D₂ of the second connecting section 2122 in the second direction, the dimension L₂ of the second connecting section 2122 in the first direction may be less than the dimension L₁ of the first connecting section 2121 in the second direction, such that the reinforcement capacity of the first connecting section 2121 is equivalent to that of the second connecting section 2122, and the space occupied by the reinforcing portion 212 is reduced, thereby reducing waste of materials.

When the dimension D₁ of the first connecting section 2121 in the first direction is less than 5% of the dimension L₁ of the first connecting section 2121 in the second direction, the reinforcement of the first connecting section 2121 is insufficient to effectively absorb the energy of an external impact when the end cap 21 is subjected to the external impact. If the dimension D₁ of the first connecting section 2121 in the first direction is greater than 35% of the dimension L₁ of the first connecting section 2121 in the second direction, the volume occupied by the first connecting section 2121 is relatively large, in the case of sufficient reinforcement, continuing to increase the dimension D₁ of the first connecting section 2121 in the first direction also causes waste of materials. If the dimension D₂ of the second connecting section 2122 in the second direction is less than 5% of the dimension L₂ of the second connecting section 2122 in the first direction, the reinforcement of the second connecting section 2122 is insufficient to effectively absorb the energy of an external impact when the end cap 21 is subjected to the external impact. If the dimension D₂ of the second connecting section 2122 in the second direction is greater than 30% of the dimension L₂ of the second connecting section 2122 in the first direction, the volume occupied by the second connecting section 2122 is relatively large, and in the case of sufficient reinforcement, continuing to increase the dimension D₂ of the second connecting section 2122 in the second direction also causes waste of materials.

The recess 214 is formed in the outer surface 2112 of the cap body 211, and the recess 214 provides a thinning effect, such that the thickness of the pressure relief region 2111 is reduced. When the internal pressure of the battery cell 20 reaches the initiation pressure, the pressure relief region 2111 is more easily opened by the internal pressure, thereby implementing pressure relief. The provision of the recess 214 makes the pressure relief region 2111 be more easily opened by the internal pressure and also be more easily opened by an external impact. Therefore, when the end cap 21 is subjected to an external impact, the reinforcing portion 212 may absorb energy of the impact, and reduce the magnitude of an impact force transmitted to the pressure relief region 2111, so as to reduce the influence of the external impact on the pressure relief region 2111, and prevent the pressure relief region 2111 from being damaged due to the external impact to a certain extent, thereby ensuring that a normal pressure relief function can be implemented. The pressure relief region 2111 is located between the first space 2124 and the second space to ensure that the pressure relief region 2111 is located within the range of the recess 214, and the recess 214 provides a relatively good thinning effect.

The foregoing descriptions are merely preferred embodiments of the present application, but are not intended to limit the present application. For those skilled in the art, the present application may have various modifications and variations. Any modifications, equivalent substitutions, improvements, and the like made within the spirit and principle of the present application should fall within the scope of protection of the present application.

## Claims

1. An end cap, comprising:
a cap body having a pressure relief region; and
a reinforcing portion arranged on a side of the cap body in a protruding manner in a thickness direction, the reinforcing portion being arranged around the pressure relief region.

2. The end cap according to claim 1, wherein the reinforcing portion comprises two first connecting sections and two second connecting sections, and one of the first connecting sections, one of the second connecting sections, the other first connecting section and the other second connecting section are sequentially connected end to end in a circumferential direction of the pressure relief region to form a closed structure; and
the two first connecting sections are arranged opposite each other in a first direction, and the two second connecting sections are arranged opposite each other in a second direction, the first direction being perpendicular to the second direction,
wherein the dimension of each of the first connecting sections in the first direction is greater than the dimension of each of the second connecting sections in the second direction.

3. The end cap according to claim 2, wherein the dimension of the first connecting section in the first direction is 5%-35% of the dimension of the first connecting section in the second direction.

4. The end cap according to claim 2 or 3, wherein the dimension of the second connecting section in the second direction is 5%-30% of the dimension of the second connecting section in the first direction.

5. The end cap according to any one of claims 2-4, wherein the reinforcing portion comprises at least one arc section, and one of the first connecting sections and one of the second connecting sections are connected to each other by means of one of the at least one arc section.

6. The end cap according to claim 1, wherein the cap body is provided with a recess in a position corresponding to the reinforcing portion, and in the thickness direction, the cap body has an inner surface and an outer surface opposite each other, the reinforcing portion is arranged on the inner surface in a protruding manner, and the recess is recessed from the outer surface in a direction close to the inner surface.

7. The end cap according to claim 6, wherein a first space is defined by an inner side wall of the reinforcing portion, a second space is defined by a side wall and a bottom wall of the recess, and the first space and the second space are located on two sides of the pressure relief region in the thickness direction.

8. The end cap according to claim 1, wherein the pressure relief region is provided with a pressure relief groove.

9. The end cap according to claim 8, wherein the pressure relief groove is a closed groove extending along a closed trajectory that is connected end to end.

10. The end cap according to claim 8 or 9, wherein the reinforcing portion and the pressure relief groove are respectively located on two sides of the pressure relief region in the thickness direction.

11. The end cap according to any one of claims 8-10, wherein the pressure relief groove comprises a first groove section, a second groove section, a third groove section and a fourth groove section that are connected in sequence;
in the first direction, the first groove section and the third groove section are arranged opposite each other, and a maximum distance between the first groove section and the third groove section is a first distance;
in the second direction, the second groove section and the fourth groove section are arranged opposite each other, and a minimum distance between the second groove section and the fourth groove section is a second distance; and
the second distance is greater than the first distance, and the first direction, the second direction and the thickness direction are perpendicular to each other.

12. The end cap according to claim 11, wherein the first groove section and the third groove section are linear grooves; and/or
the second groove section and the fourth groove section are arc grooves.

13. The end cap according to any one of claims 1-12, wherein the cap body partially protrudes in the thickness direction to form a bump, and the reinforcing portion is arranged on a side of the bump in a protruding manner in the thickness direction.

14. A battery cell, comprising:
an electrode assembly;
a housing having an accommodation space with one end open, the accommodation space being used for accommodating the electrode assembly; and
an end cap according to any one of claims 1-13, wherein the end cap is connected to the housing and closes the opening.

15. A battery, comprising:
a case; and
a battery cell according to claim 14, wherein the battery cell is accommodated inside the case.

16. The battery according to claim 15, wherein the end cap is arranged on a side of the battery cell close to a bottom wall of the case.

17. A power consuming device, comprising a battery according to either of claims 15-16, wherein the battery is configured to provide electric energy.
